# EUROPÄISCHE PATENTSCHRIFT

(11) **EP 2 414 188 B1**
(45) Veröffentlichungstag und Bekanntmachung des Hinweises auf die Patenterteilung: **06.03.2019**
(21) Anmeldenummer: 10712392.9
(22) Anmeldetag: 23.03.2010
(51) Int. Cl.: B60R 16/03, H02J 1/08, H02J 9/00

(54) **ANORDNUNG ZUR BEREITSTELLUNG ELEKTRISCHER ENERGIE**
ARRANGEMENT FOR PROVIDING ELECTRICAL ENERGY
ENSEMBLE DE PRODUCTION D'ÉNERGIE ÉLECTRIQUE

(30) Priorität: 31.03.2009 DE 102009002006
(43) Veröffentlichungstag der Anmeldung: 08.02.2012
(73) Patentinhaber: Robert Bosch GmbH, 70442 Stuttgart (DE)
(72) Erfinder: JEHLICKA, Joerg, 71277 Rutesheim (DE); GRONBACH, Roman, 70499 Stuttgart (DE)
(86) Internationale Anmeldenummer: PCT/EP2010/053740
(87) Internationale Veröffentlichungsnummer: WO 2010/112369

(56) Entgegenhaltungen:
- WO-A1-02/073782

## Beschreibung

Die Erfindung betrifft eine Anordnung zur Bereitstellung elektrischer Energie für eine elektronische Schaltung.

### Stand der Technik

In Kraftfahrzeugen werden die Klemmensteuerungsrelais, bspw. das Relais KL15 für einen Ausgang eines Zündschalters, das Relais KL50 für eine Starterschaltung und das Relais KL75 für das Radio, normalerweise über intelligente Schalter angesteuert. Diese Schalter sind je nach Fahrzeugfabrikat entweder als Lowside-Schalter oder als Highside-Schalter ausgebildet. Dabei wird eine Ansteuerung der Klemmensteuerungsrelais über einen Highside-Schalter in der Regel redundant aus zwei Versorgungsspannungspfaden versorgt. Mit einem derartigen Aufbau kann das Klemmensteuerungsrelais bei einem Startvorgang auch während eines kurzzeitigen Spannungseinbruchs betrieben werden. Aus der WO 02/073782 A1 ist bereits eine Vorrichtung zur Spannungswandlung einer Eingangsspannung in zumindest eine Ausgangsspannung bekannt, die zumindest ein Schaltmittel, ein Freilaufschaltmittel sowie einen elektrischen Energiespeicher umfasst. Das Freilaufmittel ist in einen Normalbetrieb zur Spannungswandlung angesteuert. Es sind Überwachungsmittel vorgesehen zur Erkennung der Überschreitung einer Grenzspannung durch die Ausgangsspannung, die bei Überschreiten des Freilaufschaltmittels im Sinne einer Begrenzung der Ausgangsspannung ansteuern.

### Offenbarung der Erfindung

Die Erfindung betrifft eine Anordnung zur Bereitstellung elektrischer Energie für eine elektronische Schaltung, die zum Versorgen einer Last ausgebildet ist, wobei ein Anschluss für eine Versorgungsspannung der Schaltung mit einem Pluspol einer Energiequelle und ein Anschluss für Masse der Schaltung über ein elektronisches Bauelement mit einer gleichrichtenden Wirkung, das eine Durchlassrichtung und eine Sperrrichtung aufweist, mit einem Minuspol der Energiequelle verbindbar bzw. zu verbinden ist, und wobei zwischen den beiden Anschlüssen der Schaltung ein zur Pufferung ausgebildeter Kondensator geschaltet ist.

Die elektronische Schaltung, die typischerweise mindestens einen elektronischen Baustein aufweist, umfasst in einer Ausführungsform der Erfindung einen Metall-Oxid-Halbleiter-Feldeffekttransistor (MOSFET), der in diesem Fall üblicherweise mit dem Pluspol der Spannungsquelle verbunden und ebenfalls als Highside-Schalter ausgebildet sein kann. Außerdem kann der Baustein eine Ladungspumpe aufweisen, die zumindest bei Normalbetrieb des Bausteins zur Bereitstellung elektrischer Energie für den MOSFET ausgebildet ist.

Weiterhin kann die elektronische Schaltung eine Logikschaltung aufweisen, die mit dem Minuspol der Energiequelle verbunden ist. Üblicherweise weist die Anordnung einen mit der elektronischen Schaltung verbundenen Ansteuerkreis auf, der einen Treiber mit einem geöffneten Kollektorausgang umfasst. Es ist möglich, dass die Logikschaltung der elektronischen Schaltung mit dem Ansteuerkreis verbunden ist.

Bei der Anordnung kann dem Minuspol der Energiequelle, die als Spannungsquelle ausgebildet sein kann, ein gleichrichtendes elektronisches Bauelement vorgeschaltet sein, das die sich wie eine Diode verhält und in einer Ausgestaltung der Erfindung als Diode ausgebildet ist. Das gleichrichtende Bauelement lässt den Strom nur in einer Richtung (Durchlassrichtung) durch, in der anderen Richtung (Sperrrichtung) ist typischerweise kein Durchlass möglich. Es ist vorgesehen, dass die Durchlassrichtung des Bauelements mit gleichrichtender Wirkung in Richtung des Minuspols orientiert ist. Dieses diodenartige, gleichrichtende Bauelement, bspw. eine aktive Diode, dient der partiellen Versorgung der Logik und der Charge Pump des Highsideschalters.

Bei dem Betrieb der Anordnung mit dem diodenartigen Bauelement bzw. der aktiven Diode und dem zur Pufferung ausgebildeten Kondensator kommt es bei einem Startspannungseinbruch zu einer Verschiebung des Spannungspotentials an der elektronischen Schaltung oder dem mindestens einen Baustein der Schaltung. Die Potentialverschiebung bewirkt zusammen mit dem diodenartigen Bauelement bzw. der aktiven Diode, dass lediglich die Logik und ggf. die Ladungspumpe des Bausteins durch den Kondensator gepuffert versorgt wird. Demnach weist die Anordnung temporär einen tiefen Wert für eine Unterspannungsabschaltung auf. Die Anordnung mit der Schaltung kann auch bei hohen Spannungseinbrüchen nach einem Startvorgang betrieben werden, wobei die Spannung ggf. auf Werte kleiner der normalen Mindestspannung der Schaltung sinken kann.

Die beschriebene Anordnung ist typischerweise als eine Komponente eines Steuergeräts für ein Fahrzeug ausgebildet.

Ein nicht erfindungsgemäßes Verfahren dient zur Bereitstellung elektrischer Energie für eine elektronische Schaltung, die mindestens einen elektronischen Baustein aufweist. Die elektronische Schaltung ist zum Versorgen, bspw. zum Steuern, einer anderen Last, bspw. eines Relais, ausgebildet. Dabei wird ein als Plus-Anschluss ausgebildeter Anschluss für eine Versorgungsspannung der Schaltung mit einem Pluspol einer Energiequelle und ein als Masse-Anschluss ausgebildeter Anschluss der Schaltung über ein gleichrichtendes Bauelement mit einer Durchlassrichtung und einer Sperrrichtung, bspw. über eine Diode oder aktive Diode, mit einem Minuspol der Energiequelle verbunden. Zwischen den beiden Anschlüssen der Schaltung wird ein zur Pufferung ausgebildeter Kondensator geschaltet.

In Ausgestaltung des Verfahrens wird bei Auftreten eines Spannungseinbruchs ein Massepotential des elektronischen Bausteins auf einen Wert kleiner null Volt verschoben. Mit der Erfindung kann u. a. ein Startimpuls für eine feste Lastansteuerung über einen Standard Highside-Schalter, bspw. dem MOSFET als Baustein der Schaltung, realisiert werden. Der Kondensator ist dazu geeignet, für eine Ladungspumpe des MOSFETs und für die Logik, die üblicherweise ebenfalls innerhalb der Schaltung angeordnet ist, elektrische Energie zu puffern.

Die Erfindung ermöglicht mit kostengünstigen Standardbauteilen eine Lastversorgung über einen Highside-Schalter, falls der Startspannungseinbruch bei erhöhten Anforderungen, z. B. von einer herkömmlichen Batteriespannung erfolgt. Die gewählte Anordnung bzw. Schaltung ist leicht anpassbar auf tiefe Starteinbrüche der Spannung und somit robust.

Die beschriebene Anordnung ist dazu ausgebildet, sämtliche Schritte des vorgestellten Verfahrens durchzuführen. Dabei können einzelne Schritte dieses Ver-fahrens auch von einzelnen Komponenten der Anordnung durchgeführt werden.

Weiterhin können Funktionen der Anordnung oder Funktionen von einzelnen Komponenten der Anordnung als Schritte des Verfahrens umgesetzt werden. Außerdem ist es möglich, dass Schritte des Verfahrens als Funktionen einzelner Komponenten der Anordnung oder der gesamten Anordnung realisiert werden.

Weitere Vorteile und Ausgestaltungen der Erfindung ergeben sich aus der Beschreibung und der beiliegenden Zeichnung.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

Figur 1 zeigt ein Diagramm mit einem Verlauf einer Spannung, die sich bei einer Umsetzung des erfindungsgemäßen Verfahrens ergibt.
Figur 2 zeigt in schematischer Darstellung eine aus dem Stand der Technik bekannte Vorrichtung.
Figur 3 zeigt in schematischer Darstellung eine Ausführungsform einer erfindungsgemäßen Anordnung.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

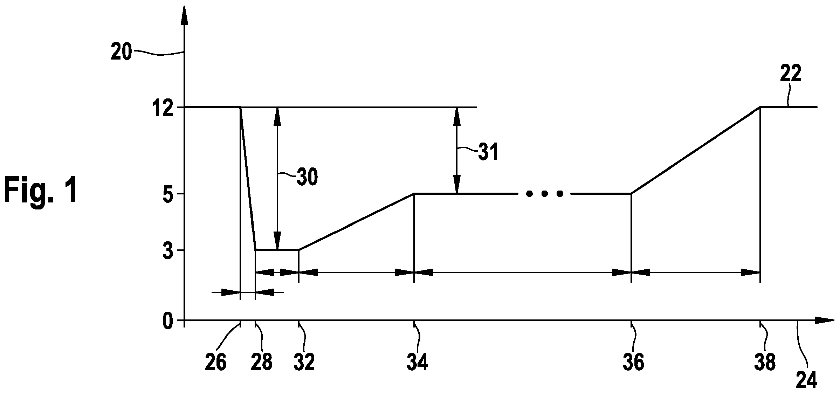

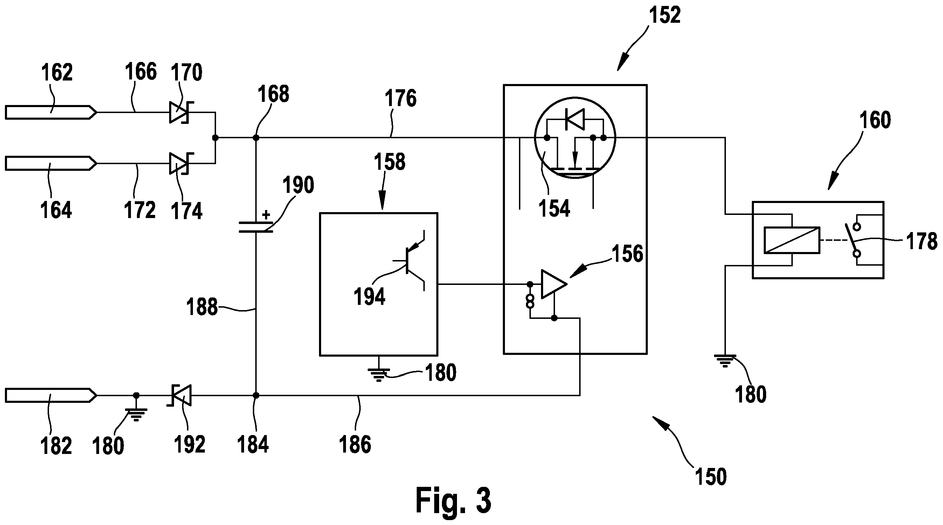

In dem Diagramm aus Figur 1 ist entlang einer vertikal orientierten Achse 20 ein Verlauf 22 für eine Spannung über einer horizontal orientierten Achse 24 für die Zeit aufgetragen. Für den Verlauf 22 der Spannung ist vorgesehen, dass die Spannung bis zu einem Zeitpunkt t0 26, zu der eine anhand von Figur 1 beschriebene Vorrichtung 50 oder eine anhand von Figur 3 näher beschriebene Ausgestaltung einer erfindungsgemäßen Anordnung 150 gestartet wird, 12 Volt beträgt. Allerdings erfolgt gleich nach dem Anschalten ein Startspannungseinbruch, bei dem sich die Spannung bis zu einem Zeitpunkt t1 28 um eine erste Spannungsdifferenz 30 von 9 Volt verringert. Ein Zeitraum zwischen dem Zeitpunkt t0 26 und t1 28 beträgt üblicherweise weniger als 5 ms. Für etwa 15 ms verbleibt die Spannung bis zu einem Zeitpunkt t2 32 auf einem Niveau von 3 Volt und steigt danach innerhalb eines Zeitraums von 50 ms bis zu einem Zeitpunkt t3 34 auf ein Niveau von 5 Volt an, so dass eine Spannungsdifferenz 31 zu der Batteriespannung 12 Volt 7 Volt beträgt. Wie der Verlauf 22 zeigt, verbleibt die Spannung etwa 1 Sekunde lang bis zum Zeitpunkt t4 36 auf dem Niveau von 5 Volt. Etwa 100 ms später hat der Verlauf 22 der Spannung bis zu dem Zeitpunkt t5 38 den Wert für die Startspannung bzw. die Batteriespannung von 12 Volt erreicht.

Figur 1 zeigt somit die Spezifikation eines Startspannungseinbruchs mit erhöhten Anforderungen. Um die Startfähigkeit auch bei einer kalten und stark entladenen Batterie zu gewährleisten, soll die Klemmensteuerung auch bei einem sehr tiefen Startspannungseinbruch noch gewährleistet sein.

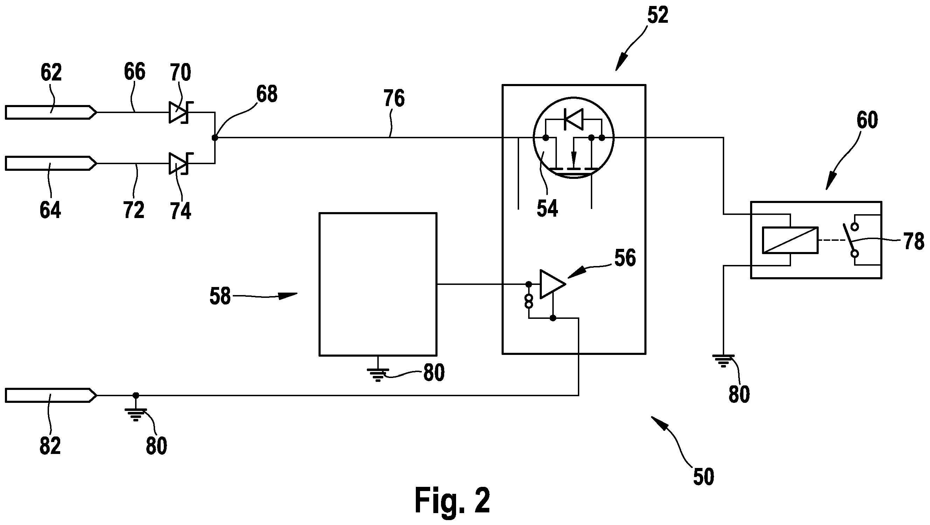

Die in Figur 2 schematisch dargestellte, aus dem Stand der Technik bekannte Vorrichtung 50 umfasst eine Schaltung U1 52 mit einem MOSFET 54 und einer Logikschaltung 56, einen Ansteuerkreis 58 und ein Relais 60 bzw. eine allgemeine Last. Ein Eingang des MOSFETs 54 innerhalb der Schaltung 52 ist über eine erste Klemme "KL 30 L" 62 und eine zweite Klemme "KL 30 R" 64 mit einem Pluspol einer Energiequelle verbunden. Entlang einer ersten Zuleitung 66 zwischen der ersten Klemme 62 und einem Knotenpunkt 68 ist eine erste Diode D1 70 angeordnet. Entlang einer zweiten Zuleitung 72 zwischen der zweiten Klemme 64 und dem Knotenpunkt 68 ist eine zweite Diode D2 74 angeordnet. Eine Plus-Zuleitung 76 verläuft zwischen dem Knotenpunkt 68 und dem Eingang des MOSFETs 54. Ein Ausgang des MOSFETs 54 ist mit dem Relais 60 bzw. der allgemeinen Last, das bzw. die einen Schalter 78 umfasst, verbunden. Weiterhin liegt ein Ausgang des Relais 60 bzw. der allgemeinen Last auf Masse 80. Außerdem ist vorgesehen, dass die Logikschaltung 56 der Schaltung 52 mit dem Ansteuerkreis 58 und über eine dritte Klemme "KL 31" 82 mit einem Minuspol der Energiequelle verbunden ist.

Die in Figur 2 gezeigte Vorrichtung 50 erfüllt die Forderung gemäß Figur 1 eines sehr tiefen Spannungseinbruchs nicht. Die tiefe Spannung im Bereich zwischen den Zeitpunkten t1 28 und t3 34 liegt unter der Betriebsspannung der Schaltung U1 52. Durch den zusätzlichen Spannungsfall an einer der Dioden D1 70 oder D2 74 wird die für die Schaltung U1 52 nutzbare Betriebsspannung weiter verringert. Diese tiefe Betriebsspannung ist in der Regel außerhalb des spezifizierten Bereichs der Schaltung U1 52, da eine zum Betrieb des MOSFETs 54 notwendige Ladungspumpe, die hier nicht dargestellt ist, nicht mehr funktioniert.

Die in Figur 3 schematisch dargestellte Ausführungsform einer erfindungsgemäßen Anordnung 150 umfasst ähnlich wie die in Figur 2 schematisch dargestellte Vorrichtung 50 eine Schaltung U1 152, die als eine erste Komponente einen MOSFET 154, dem eine hier nicht dargestellte Ladungspumpe zugeordnet ist, und als zweite Komponente einen Logikschaltkreis 156 umfasst. Außerdem weist die Anordnung 150 einen mit der Schaltung U1 152 zusammenwirkenden Ansteuerkreis 158 und eine Last 160 auf, die hier als Relais ausgebildet ist, die über die Schaltung U1 152 bzgl. eines Zustands zu steuern ist. Ein Eingang der Schaltung 152, der hier einem Eingang des MOSFETs 154 entspricht, ist über eine erste Klemme "KL 30 L" 162 und eine zweite Klemme "KL 30 R" 164 redundant mit einem Pluspol einer als Batterie ausgebildeten, in Figur 3 nicht dargestellten Energiequelle verbunden.

Entlang einer ersten Plus-Zuleitung 166 der ersten Klemme 162 bis zu einem Plus-Anschluss 168 ist eine erste Diode D1 170 angeordnet. Entlang einer zweiten Plus-Zuleitung 172 zwischen der zweiten Klemme 164 und dem Plus-Anschluss 168 ist eine zweite Diode D2 174 angeordnet. Zwischen dem Plus-Anschluss 168 und dem Eingang der Schaltung 152 und somit des MOSFETs 154 verläuft eine dritte Plus-Zuleitung 176. Da der MOSFET 154 an dem Pluspol der Energiequelle angeschlossen ist, wird dieser auch als ein sog. Highside-Schalter bezeichnet. Ein Ausgang des MOSFETs 154 ist mit der allgemeinen Last 160, verbunden. Ein Ausgang der allgemeinen Last 160, die einen Schalter 178 aufweist, liegt auf Masse 180. Die Logikschaltung 156 des Bausteins 152 ist einerseits mit dem Ansteuerkreis 158 und andererseits über eine dritte Klemme "KL 31" 182 mit einem Minuspol der Energiequelle verbunden.

Weiterhin weist die in Figur 3 schematisch dargestellte Ausführungsform der erfindungsgemäßen Anordnung 150 zwischen dem Plus-Anschluss 168 und einem Masse-Anschluss 184, der entlang einer Minus-Zuleitung 186 zwischen der Logikschaltung 156 und der dritten Klemme 182 angeordnet ist, eine Verbindungsleitung 188 auf, entlang der ein zur Pufferung vorgesehener Kondensator 190 angeordnet ist. Es ist bei der hier gezeigten Ausführungsform der Anordnung 150 vorgesehen, dass zwischen der dritten Klemme 182 und dem Minus-Anschluss 184 eine dritte Diode D3 192, als gleichrichtendes elektronisches Bauelement mit einer Durchlassrichtung und einer Sperrrichtung angeordnet ist. Außerdem umfasst der Ansteuerkreis 158 einen hier als Transistor ausgebildeten Treiber 194 mit einem geöffneten Kollektorausgang.

Durch die in Figur 3 gezeigte Ausführungsform einer erfindungsgemäßen Anordnung kann die Ansteuerung eines an der Schaltung 152 D1 angeschlossenen Verbrauchers, hier der Last 160, auch während des in Figur 1 gezeigten Startspannungseinbruchs sichergestellt werden.

Tiefe Spannungen führen an der Schaltung 52 U1 innerhalb der in Figur 2 gezeigten Vorrichtung 50 zu einem Ausfall der Ladungspumpe und somit zum Ausfall einer Schaltfunktion der Schaltung 52 U1.

Um die Ladungspumpe zur Versorgung des MOSFETs 154 innerhalb des Anordnung 150 aus Figur 3 während des tiefen Spannungseinbruchs aktiv zu halten, ist in einer Ausgestaltung der Erfindung vorgesehen, diese mit einer ausreichenden Spannung zu versorgen. Die Ladungspumpe ist in der als integrierter Highside-Schalter ausgebildeten Schaltung 152 intern mit der Versorgung des Leistungs-MOSFETs 154 verbunden. Um das positive Versorgungspotential der Ladungspumpe zu stützen, wären somit bei üblichen Anwendungen sehr große Kapazitäten notwendig. Um ausschließlich den geringeren Betriebsstrom der Ladungspumpe und nicht eines gesamten Lastkreises zu puffern, wird das gleichrichtende elektronische Bauelement mit einer Durchlassrichtung und einer Sperrrichtung und somit die weitere dritte Diode D3 192 in den Masse- bzw. GND-Anschluss der Schaltung U1 152 eingefügt und der Kondensator 190 zwischen dem Plus-Anschluss 168 (VBB) und dem GND- bzw. Masse-Anschluss 184 der Schaltung U1 152 angeschlossen. Dabei ist vorgesehen, dass die Durchlassrichtung der dritten Diode D3 192 als gleichrichtendes Bauelement in Richtung der dritten Klemme 182 und somit des Minuspols orientiert ist.

Mit dieser Zusatzschaltung, die den Kondensator 190 und die dritte Diode D3 192 als gleichrichtendes Bauelement umfasst, wird die Versorgung des Logikschaltkreises 156 in der Schaltung U1 152 über den Kondensator 190 ausreichend gepuffert, um in der Zeitspanne zwischen den Zeitpunkten t1 28 und t3 34 durch den Kondensator C1 190 versorgt zu werden. In der Zeitspanne zwischen den Zeitpunkten t3 34 und t5 38 ist die Versorgungsspannung ausreichend hoch, um die Schaltung U1 152 wieder direkt über die Dioden D1 170, D2 174 und D3 192 zu versorgen. Die Zusatzschaltung führt dazu, dass sich bei einem Spannungseinbruch das Massepotential der Schaltung U1 152 unter 0 Volt verschiebt. Der dadurch entstehende Pegelversatz im Ansteuerkreis 158 kann bspw. durch die Verwendung eines Open-Kollektor-Treibers ausgeglichen werden.

## Patentansprüche

1. Anordnung zur Bereitstellung elektrischer Energie für eine elektronische Schaltung (152), umfassend die elektronische Schaltung (152), die zum Versorgen einer Last (160) ausgebildet ist, wobei die elektronische Schaltung (152) einen Logikschaltkreis (156) und eine Ladungspumpe zur Versorgung eines MOSFETs (154) umfasst, wobei ein Anschluss für eine Versorgungsspannung der Schaltung (152) mit einem Pluspol einer Energiequelle und ein Anschluss für Masse (180) des Logikschaltkreises (156) über ein gleichrichtendes elektronisches Bauelement (192) mit einem Minuspol der Energiequelle verbunden ist, und wobei zwischen den beiden Anschlüssen der Schaltung (152) ein Kondensator (190) zur partiellen Versorgung der Schaltung (152) mit elektrischer Energie geschaltet ist, **dadurch gekennzeichnet, dass** das gleichrichtende elektronischen Bauelement (192) vor dem Anschluss für Masse (180) des Logikschaltkreises (156) eingefügt ist und die Last (160) direkt mit Masse (180) verbunden ist, zur Pufferung einer Versorgungsspannung für den Logikschaltkreis (156) der Schaltung (152).

2. Anordnung nach Anspruch 1, bei der das gleichrichtende elektronische Bauelement als Diode (192) ausgebildet ist.

3. Anordnung nach Anspruch 1 oder 2, bei der die elektronische Schaltung (152) einen Metall-Oxid-Halbleiter-Feldeffekttransistor (152) aufweist, der mit dem Pluspol der Energiequelle verbunden ist.

4. Anordnung nach einem der voranstehenden Ansprüche, die einen mit der elektronischen Schaltung (152) verbundenen Ansteuerkreis (158) aufweist, der einen Treiber (194) mit einem geöffneten Kollektorausgang umfasst.

5. Anordnung nach Anspruch 4, bei dem die Logikschaltung (156) mit der elektronischen Schaltung (152) mit dem Ansteuerkreis (158) verbunden ist.

## Claims

1. Arrangement for providing electrical energy for an electronic circuit (152), comprising the electronic circuit (152) configured for supplying a load (160), wherein the electronic circuit (152) comprises a logic circuit (156) and a charge pump for supplying a MOSFET (154), wherein a terminal for a supply voltage of the circuit (152) is connected to a positive pole of an energy source and a terminal for earth (180) of the logic circuit (156) is connected to a negative pole of the energy source via a rectifying electronic component (192), and wherein a capacitor (190) for partially supplying the circuit (152) with electrical energy is connected between the two terminals of the circuit (152), **characterized in that** the rectifying electronic component (192) is inserted upstream of the terminal for earth (180) of the logic circuit (156) and the load (160) is directly connected to earth (180), for buffering a supply voltage for the logic circuit (156) of the circuit (152).

2. Arrangement according to Claim 1, wherein the rectifying electronic component is configured as a diode (192).

3. Arrangement according to Claim 1 or 2, wherein the electronic circuit (152) comprises a metal oxide semiconductor field effect transistor (152) connected to the positive pole of the energy source.

4. Arrangement according to any of the preceding claims, which comprises a drive circuit (158) connected to the electronic circuit (152), said drive circuit comprising a driver (194) having an open collector output.

5. Arrangement according to Claim 4, wherein the logic circuit (156) with the electronic circuit (152) is connected to the drive circuit (158).

## Revendications

1. Arrangement pour fournir de l'énergie électrique pour un circuit électronique (152), comprenant le circuit électronique (152), qui est configuré pour alimenter une charge (160), le circuit électronique (152) comportant un circuit logique (156) et une pompe de charge destinée à alimenter un MOSFET (154), une borne pour une tension d'alimentation du circuit (152) étant reliée à un pôle positif d'une source d'énergie et une borne pour la masse (180) du circuit logique (156) étant reliée par le biais d'un composant électronique (192) redresseur à un pôle négatif de la source d'énergie, et un condensateur (190) servant à l'alimentation partielle du circuit (152) avec de l'énergie électrique étant branché entre les deux bornes du circuit (152), **caractérisé en ce que** le composant électronique (192) redresseur est inséré avant la borne pour la masse (180) du circuit logique (156) et la charge (160) est reliée directement à la masse (180), en vue d'amortir une tension d'alimentation pour le circuit logique (156) du circuit (152).

2. Arrangement selon la revendication 1, avec lequel le composant électronique redresseur est réalisé sous la forme d'une diode (192).

3. Arrangement selon la revendication 1 ou 2, avec lequel le circuit électronique (152) possède un transistor à effet de champ en semiconducteur à oxyde métallique (152) qui est relié au pôle positif de la source d'énergie.

4. Arrangement selon l'une des revendications précédentes, qui possède un circuit d'excitation (158) relié au circuit électronique (152), lequel comporte un circuit d'attaque (194) doté d'une sortie à collecteur ouverte.

5. Arrangement selon la revendication 4, avec lequel le circuit logique (156) est relié au circuit électronique (152) comprenant le circuit d'attaque (158).
